Europäisches Patentamt

European Patent Office

Office européen des brevets

(19)

(11) Veröffentlichungsnummer: **0 214 444**
**A2**

(12) **EUROPÄISCHE PATENTANMELDUNG**

(21) Anmeldenummer: **86110540.1**

(22) Anmeldetag: **30.07.86**

(51) Int. Cl.⁴: **C08G 59/16**

(30) Priorität: **08.08.85 DE 3528461**

(43) Veröffentlichungstag der Anmeldung:
**18.03.87 Patentblatt 87/12**

(84) Benannte Vertragsstaaten:
**CH DE FR GB IT LI NL**

(71) Anmelder: **BASF Aktiengesellschaft**
**Carl-Bosch-Strasse 38**
**D-6700 Ludwigshafen(DE)**

(72) Erfinder: **Czauderna, Bernhard, Dr.**
**Kapellenweg 34**
**D-6945 Hirschberg(DE)**

(54) **Verfahren zur Herstellung von Vinylesterharzen.**

(57) Die Erfindung betrifft ein Verfahren zur Herstellung von Vinylesterharzen durch Umsetzung eines Epoxidharzes mit einer ungesättigten Carbonsäure in Gegenwart einer Katalysator-Mischung aus

A. einem kationischen Katalysator, ausgewählt aus Chloriden ein-bis vierwertiger Metalle und Kationenaustauscherharzen und

B. einem anionischen Katalysator, ausgewählt aus Lewis-Basen und Anionenaustauscherharzen.

EP 0 214 444 A2

## Verfahren zur Herstellung von Vinylesterharzen

Vinylesterharze werden durch Umsetzung eines Epoxidharzes mit einer ungesättigten Carbonsäure in Gegenwart eines Katalysators hergestellt. Gebräuchliche Katalysatoren sind tertiäre Amine und Ionenaustauscherharze. Während mit Ionenaustauscherharzen nur verhältnismäßig niedrige Umsätze unter 50 % erhalten werden, liegen die Umsätze mit Aminen höher, allerdings werden die Viskositäten der erhaltenen Vinylesterharze mit steigendem Umsatz immer höher, bei Umsätzen über 95 % gelieren die Ansätze.

Der Erfindung lag daher die Aufgabe zugrunde, verhältnismäßig niedrigviskose Vinylesterharze durch katalytische Umsetzung von Epoxidharzen mit ungesättigten Carbonsäuren bei hohen Umsätzen herzustellen.

Diese Aufgabe wird erfindungsgemäß gelöst, wenn man eine Katalysatormischung einsetzt aus

A. einem kationischen Katalysator, ausgewählt aus Chloriden ein-bis vierwertiger Metalle und Kationenaustauscherharzen und

B. einem anionischen Katalysator, ausgewählt aus Lewis-Basen und Anionenaustauscherharzen.

Als Epoxidharze kommen die üblichen Polyglycidylether in Frage. Bevorzugt sind Bisphenol-A-diglycidylether und Novolakpolyglycidylether. Daneben sind z.B. auch Polyphenolalkylpolyglycidylether, wie Triphenolpropantriglycidylether, sowie Polyglycidylether von Friedel-Crafts-Harzen geeignet. Mann kann auch kettenverlängerte Epoxidharze einsetzen, die durch Umsetzung eines Polyphenols, z.B. Bisphenol A mit einer Diglycidylverbindung, z.B. dem Bisphenol-A-diglycidylether hergestellt wurden. Auch diese Umsetzung wird katalytisch durchgeführt, wobei bevorzugt die erfindungsgemäße Katalysatormischung A + B verwendet wird.

Als ungesättigte Carbonsäuren sind Methacrylsäure und Acrylsäure bevorzugt. Daneben sind z.B. auch Zimtsäure sowie Halbester aus einer Dicarbonsäure und einem ungesättigten Hydroxyalkylcarbonsäureester geeignet.

Epoxidharz und ungesättigte Carbonsäuren werden bevorzugt in stöchiometrischem Verhältnis eingesetzt, wobei geringe Abweichungen zulässig sind.

Die Umsetzung wird bevorzugt in Substanz durchgeführt, man kann jedoch auch in Gegenwart von Lösungsmitteln arbeiten, beispielsweise von Toluol oder Methylethylketon.

Die Reaktionstemperatur beträgt vorzugsweise 80 bis 150°C.

Als kationische Katalysatoren kommen in Frage: Chloride ein-bis vierwertiger Metalle, z.B. Natriumchlorid, Magnesiumchlorid, Aluminiumchlorid und Titantetrachlorid. Bevorzugt sind Lithiumchlorid und Zinkchlorid. Daneben sind auch Kationenaustauscherharze bevorzugt, z.B. solche auf Basis von sulfonierten Styrol/Divenylbenzol-Copolymeren.

Die kationischen Katalysatoren werden bevorzugt in Mengen von 0,25 bis 5 Mol.%, insbesondere von 0,5 bis 3 Mol.%, bezogen auf die reagierende Carboxylgruppe, eingesetzt.

Als anionische Katalysatoren kommen Lewis-Basen, z.B. tertiäre Amine, Phosphine und Stibine, sowie Sulfide in Frage. Bevorzugt sind Triethylamin, Tributylamin, Pyridin, Diazabicyclooctan und insbesondere Benzyldimethylamin. Daneben sind auch Anionenaustauscherharze bevorzugt, z.B. solche auf Basis von ' quaternierten Styrol/Divinylbenzol-Copolymeren.

Die anionischen Katalysatoren werden bevorzugt in Mengen von 0,2 bis 2 Mol.%, insbesondere von 0,3 bis 2 Mol.%, bezogen auf die Carboxylgruppe, eingesetzt.

Nach dem erfindungsgemäßen Verfahren können Vinylesterharze mit praktisch vollständiger Umsetzung hergestellt werden, so daß sie frei von Restepoxidgruppen sind. Dabei werden keine extrem hohen Viskositäten erhalten und es besteht keine Gefahr des Gelierens. Bei Verwendung einer Katalysatorkombination aus Kationen-und Anionenaustauscherharzen sind die Vinylesterharze frei von Katalysatorresten, was eine Anwendung der daraus nach Abtrennung hergestellten Harze im Bereich der Lebensmittelverpackung ermöglicht.

Die in den Beispielen genannten Prozente sind Molprozente.

Beispiel 1

In ein auf 70°C erwärmtes Gemisch aus Bisphenol-A-Epoxidharz (Epikote 828 der Firma Shell) und Bisphenol A als Kettenverlängerer - (Molverhältnis 2:1) wird das Katalysatorgemisch bzw. der Vergleichskatalysator eingetragen und unter Rühren auf 115 bis 120°C erwärmt. Nach Erreichen des für einen 100 %igen Umsatz berechneten Epoxidwertes wird 1 Mol Methacrylsäure pro Mol Epoxidharz während 30 bis 60 Minuten zudosiert und die Mischung bis zum Epoxidwert < 0,005 bei 115 bis 120°C gerührt.

Beispiel 2

Eine Mischung aus Novolakepoxidharz (Epoxid 5038 der Firma Duroplastchemie), 1 Mol Methacrylsäure pro Mol Epoxidgruppe und dem Katalysatorgemisch bzw. dem Vergleichskatalysator wird bei 100 bis 110°C bis zum Epoxidwert < 0,005 (= 99 % Umsatz) gerührt.

In der Tabelle sind die Umsätze und die Viskosität der Vinylesterharze, gemessen an einem Epprecht Platte/Konus-Viskosimeter bei 125°C angegeben.

| Beispiel | kation. Katalysator | anion. Katalysator | Umsatz % | Viskosität mPas |
|---|---|---|---|---|
| 1 | - | 0,75 % BDA | 93 | 1100 |
|  | - | 0,75 % BDA | 97 | Gelierung |
|  | 2,5 % LiCl | - | < 50 |  |
|  | 2,5 % LiCl | 0,75 % BDA | 99 | 560 |
|  | 2 % Lewatit S 100 | 0,75 % Lewatit MP 500 | 99 | 450 |
| 2 | - | 0,75 % BDA | 92 | 1800 |
|  | - | 0,75 % BDA | 95 | Gelierung |
|  | 2,5 % LiCl | 0,75 % BDA | 99 | 800 |
|  | 2 % Lewatit S 100 | 0,75 % Lewatit MP 500 | 99 | 960 |

**Ansprüche**

1. Verfahren zur Herstellung von Vinylesterharzen durch Umsetzung eines Epoxidharzes mit einer ungesättigten Carbonsäure in Gegenwart eines Katalysators, dadurch gekennzeichnet, daß eine Katalysator-Mischung eingesetzt wird aus

A. einem kationischen Katalysator, ausgewählt aus Chloriden ein-bis vierwertiger Metalle und Kationenaustauscherharzen und

B. einem anionischen Katalysator, ausgewählt aus Lewis-Basen und Anionenaustauscherharzen.

2. Verfahren nach Anspruch 1, dadurch gekennzeichnet, daß das Epoxidharz Bisphenol-A-diglycidylether oder ein Novolakpolyglycidylether ist.

3. Verfahren nach Anspruch 1, dadurch gekennzeichnet, daß das Epoxidharz hergestellt wurde durch Umsetzung eines Polyphenols mit einer Diglycidylverbindung in Gegenwart der Katalysator-Mischung A + B.

4. Verfahren nach Anspruch 1, dadurch gekennzeichnet, daß die ungesättigte Carbonsäure Acrylsäure oder Methacrylsäure ist.

5. Verfahren nach Anspruch 1, dadurch gekennzeichnet, daß der kationische Katalysator Lithiumchlorid oder Zinkchlorid ist.

6. Verfahren nach Anspruch 1, dadurch gekennzeichnet, daß der anionische Katalysator ein tertiäres Amin, vorzugsweise Benzyldimethylamin ist.

7. Verfahren nach Anspruch 1, dadurch gekennzeichnet , daß eine Katalysatormischung aus einem Kationen-und einem Anionenaustauscherharz eingesetzt wird.